(19) Europäisches Patentamt
European Patent Office
Office européen des brevets

(11) Publication number: **0 349 341**
**A2**

# EUROPEAN PATENT APPLICATION

(21) Application number: **89306675.3**

(22) Date of filing: **30.06.89**

(51) Int. Cl.5: **H 01 L 39/00**

(30) Priority: **30.06.88 JP 163550/88**

(43) Date of publication of application:
**03.01.90 Bulletin 90/01**

(84) Designated Contracting States: **DE FR GB**

(71) Applicant: **ANELVA CORPORATION**
**8-1 Yotsuya 5-chome**
**Fuchu-shi Tokyo 183 (JP)**

(72) Inventor: **Sekiguchi, Atsushi**
**c/o Anelva Corporation 8-1 Yotsuya 5-chome**
**Fuchu-shi 183 Tokyo (JP)**

**Mito Hideo**
**c/o Anelva Corporation 8-1 Yotsuya 5-chome**
**Fuchu-shi 183 Tokyo (JP)**

(74) Representative: **Crisp, David Norman et al**
**D. YOUNG & CO. 10 Staple Inn**
**London, WC1V 7RD (GB)**

(54) **Method of improving and/or producing oxide superconductor.**

(57) The invention relates to a method of improving or producing an oxide superconductor. An oxide superconductor or starting material of oxide superconductor as an object material is irradiated with active oxygen species. The irradiation process is carried out while keeping the object material at a temperature at which the object material is effectvely oxidized with the active oxygen species. The active oxygen species are formed on the inside or in the peripheral portion of a nonequilibrium or equilibrium, high-temperature plasma.

*FIG.2*

Description

# METHOD OF IMPROVING AND/OR PRODUCING OXIDE SUPERCONDUCTOR

The present invention relates to a method of improving an oxide superconductor having poor superconducting properties because of its low oxygen content or producing a superior oxide superconductor from a starting material having no superconducting properties, in particular through efficient oxidation thereof to increase the oxygen content to thereby readily, and substantially improve the superconducting properties of the former or readily give the latter good superconducting properties.

In the wake of the discovery of oxide superconductors, technological development of such oxide superconductors has recently been progressing at a quick tempo. It is known that the oxygen content of an oxide superconductor generally has a great influence on its superconducting properties. In the production of an oxide superconductor, however, extreme difficulty is encountered in securing a predetermined oxygen content in the resulting superconductor.

For example, a $Ba_2YCu_3O_x$ superconductor, wherein x, which may be zero, stands for a quantitative proportion of oxygen in the composition of the superconductor, may be produced by mixing barium carbonate ($BaCO_3$) with yttrium oxide ($Y_2O_3$) and copper oxide ($CuO$) at a predetermined ratio, compression-molding the resulting mixture into a pellet, and heating the pellet in an oxygen-filled furnace under atmospheric pressure at 930°C.

As is well known, the pellet thus treated is of tetragonal crystal structure at a temperature of 930°C. When this oxide pellet is dipped quickly into liquid nitrogen to be quenched from 930°C, it still maintains the tetragonal crystal structure. However, this pellet does not show superconductivity because it has a low oxygen content (see, for example, H. Ihara, et al. Physica C 153-155 (1988) 948-949). In the following description, oxide substances incapable of showing superconductivity because of their low oxygen contents will be referred to as "tetragonal structure substances".

In order to increase the oxygen content of the pellet to a suitable value to provide the best superconducting substance, the pellet must usually be slowly cooled from the above-mentioned temperature of 930°C over one day and night through furnace cooling. The pellet cooled in this manner is of orthorhombic crystal structure and shows superconductivity at temperatures of around 90K or lower. In the following description, orthorhombic oxide superconducting substances showing superconductivity at temperatures of around 90K or lower will be referred to as "orthorhombic structure substances".

Thus, according to the foregoing conventional method, a pellet must be slowly cooled from 930°C over one day and night through furnace cooling in order to secure superior superconducting properties. Furnace cooling over such a long period of time is not adaptable to industrial production of superconductors.

B.G. Bagley et al reported in their paper [Appl. Phys. Lett. 51 (1987) p. 622 - p. 624] that a tetragonal structure substance incapable of showing superconductivity was subjected to a radiofrequency discharge treatment in an atmosphere of oxygen to be changed into an orthorhombic structure substance capable of showing superconductivity. In this case, however, furnace cooling for over 285 hours is necessary for securing a 90-K class superconductor, which shows superconductivity at temperatures of around 90K or lower. Furnace cooling over such a long period of time is industrially inapplicable.

S. Minomo et al. reported in their paper (Jpn. J. Appl. Phys. 27 (1988) p. L411 - L413) that a superconducting substance of 60-K class, which shows superconductivity at temperatures of around 60K or lower, was heated up to 400°C and subjected to an ECR (electron cyclotron resonance) discharge treatment at 400°C for 30 minutes to be changed into an improved superconducting substance having a 90-K class of superconductivity. However, this is merely concerned with discharge and heating treatments of a substance already capable of showing superconductivity in itself to improve the superconducting properties thereof, and hence is different from such a treatment as to change the crystal structure of a tetragonal substance into a superconducting crystal structure.

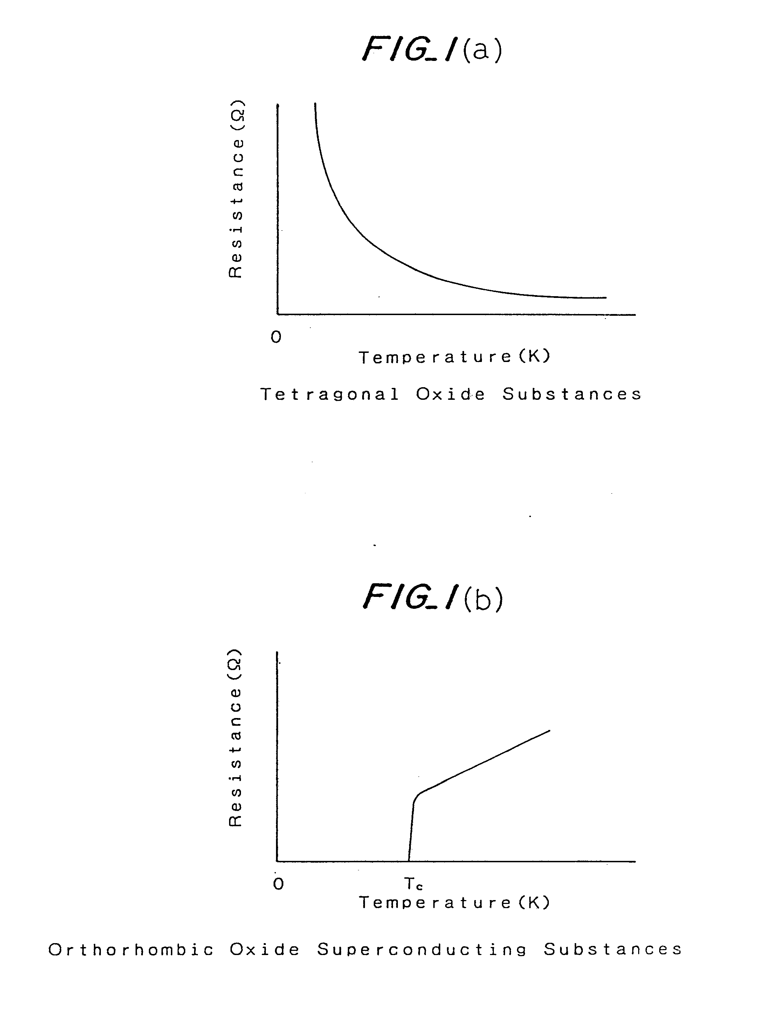

Tetragonal structured oxide substances show semiconductor-like characteristics of electric resistance with temperature as shown in Fig. 1(a) of the accompanying drawings, while orthorhombic structured oxide superconducting substances show characteristics of electric resistance with temperature as shown in Fig. 1(b), which corresponds to the characteristics of superconductors. In Figs. 1(a) and 1(b), the abscissa represents the temperature (K) on an arbitrary scale, while the ordinate represents the electic resistance ($\Omega$) on an arbitrary scale. The superconductive transition temperature or critical temperature $T_c$ is a temperature at and below which superconductivity is shown. Therefore, in the case of the superconducting substance reported by S. Minomo et al., it is important to note that "the crystal structure of the substance was not changed". In order to change a tetragonal structure substance into an orthorhombic structure substance having superconducting properties, the former must usually be treated in an atmosphere of oxygen at a high temperature (at 300°C, no change thereof occurs even when it is treated for 2 hours). Further, it has heretofore been impossible to change a tetragonal structure substance quenched from a high temperature into an orthorhombic structure substance having superconducting properties within a short period of time.

Etatsu et al. reported in 1988 35th Oyobutsurigaku-Kanren Koenkai 29a-X-5 that a tetragonal structure substance was locally changed into an orthorhombic structure substance through oxygen ion implantation and laser annealing. However, this procedure is an extremely local treatment, which is, therefore, inapplicable to large scale production of broad-area superconductors.

As described above, in order to change a tetragonal structure substance into an orthorhombic structure substance having good superconducting properties, the tetragonal structure substance must be treated in an atmosphere of oxygen in a furnace at a temperature higher than that of at least 400°C for a long period of time, or must be treated in an oxygen plasma for a period of time longer than that of at least 200 hours. Thus, all the foregoing conventional methods involving an annealing-in-oxygen ($O_2$) treatment under atmospheric pressure require a long treatment time, which has posed a problem of inadaptability to large scale production of superconductors.

Further, the aforementioned ECR discharge treatment method is capable of improving the superconducting properties of an orthorhombic structure substance itself, but incapable of changing a tetragonal structure substance into an orthorhombic structure substance.

In view of the foregoing problems of the prior art, the present invention seeks to provide an improvement-by-oxidation method which can change a tetragonal structure substance produced through quenching from a high temperature instead of slow cooling therefrom or an orthorhombic structure substance having inferior superconducting properties into a substance having superior superconducting properties by an oxidation treatment for a shorter period of time than that in the conventional annealing-in-oxygen treatment under atmospheric pressure.

According to the present invention there is provided a method of improving or producing an oxide superconductor, comprising irradiating an object material comprising an oxide superconductor or a starting material for an oxide superconductor with active oxygen species formed within or at the periphery of a nonequilibrium or equilibrium high-temperature plasma, while keeping said object material at a temperature at which said object material is effectively oxidized with said active oxygen species.

A nonequilibrium or equilibrium, high-temperature plasma produces therein a large quantity of atomic active species, which have a high diffusion coefficient for diffusion into a solid and therefore quickly diffuse into a solid even at low temperatures. When an oxide superconductor or a starting material for an oxide superconductor is used as the object substance, conveniently in the form of a pellet, and is irradiated with such active oxygen species, the active oxygen species diffuse into the superconductor or the starting material for a superconductor to supplement the deficiency of oxygen therein to thereby sufficiently increase the oxygen content, whereby the superconducting properties of the superconductor can be improved while the starting material for a superconductor can be changed into a superconductor having good superconducting properties.

Therefore, according to the method of the present invention, slow cooling of a pellet, which is effected according to the aforementioned conventional method, is unnecessary after irradiation with active oxygen species produced by a nonequilibrium or equilibrium high-temperature plasma because the pellet can be effectively oxidized in a short time at a low temperature during the course of the irradiation with the active oxygen species to secure good superconducting properties. An object to be oxidized with active oxygen species at a low temperature may be a pellet of a tetragonal structure substance prepared through quenching.

The novel effective method of the present invention has been developed from the basics of "Surface Processing Apparatus Utilizing Local Thermal Equilibrium Plasma and Method of Using Same", disclosed in US Patent No 4,664,747 issued to the applicants of the instant application, and uses the step of oxidation of an oxide superconductor which was not publicly known at the priority date of the above-mentioned US Patent.

A description will now be given of a nonequilibrium high-temperature plasma and an equilibrium high-temperature plasma. As RF power supplied to a coil is increased, radiofrequency glow discharge occurs first. When the RF power is further increased, the luminance of a plasma greatly increases and a thermodynamic nonequilibrium high-temperature (TNH) plasma or a thermodynamic equilibrium high-temperature (TEH) plasma (referred to in brief as a "TNH plasma" and a "TEH plasma", respectively) can be observed. In general, such nonequilibrium high-temperature plasma and equilibrium high-temperature plasma are characterized by a very high optical emission intensity, formation of a large quantity of active species particularly including a large quantity of atomic active species, and a low discharge impedance in electrical terms, as compared with radiofrequency glow disharge. Nonequilibrium high-temperature plasma and equilibrium high-temperature plasma is described in detail in Hideo Mito et al., "Shinku," Vol. 31, No. 4 (1988) p. 271 - p. 278, and literature cited therein and will therefore not be described here.

Various preferred features and embodiments of the invention will now be described by way of non-limiting example with reference to the accompanying drawings, in which:-

Figs. 1(a) and 1(b) are diagrams showing electric resistance versus temperature characteristic curves of tetragonal and orthorhombic structure crystals, which are illustrative of the electrical characteristics thereof;

Fig. 2 is a front cross-sectional view of an apparatus suitable for carrying out embodiments of the method of the present inventin;

Figs. 3(a) to 3(c) are diagrams showing the results of X-ray diffractometric analyses of an object not treated and objects treated according to embodiments of the method of the present invention, of which Fig. 3(a) is of the object not treated, Fig. 3(b) is of an object treated according to one embodiment of the present invention at 300°C for 1 minute, and Fig. 3(c) is of an object treated according to another embodiment of the present invention at 300°C for 5 minutes;

Figs. 4(a) to 4(c) are diagrams showing electric resistance versus temperature characteristic curves of an object not treated and objects treated according to embodiments of the method of the present invention; of which Fig. 4(a) is of the object not treated, Fig. 4(b) is of an object treated according to one embodiment of the present invention at 300°C for 30 minutes, and Fig. 4(c) is of an object treated according to another embodiment of the present invention at 400°C for 30 minutes; and

Figs. 5 to 8 are schematic diagrams of surface processing apparatus, which are suitable for performing embodiments of the present invention.

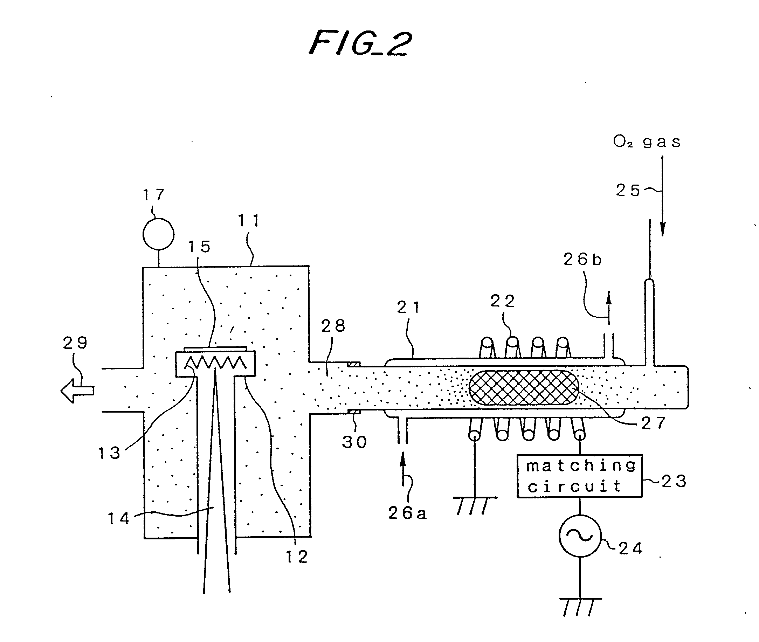

Fig. 2 shows a front sectional view of an apparatus with which an embodiment method of the present invention can be carried out. Fig. 2 is a schematic drawing to such an extent as to merely facilitate understanding of the present invention. Therefore, shapes and sizes of constituent parts as well as positional relationships therebetween should not be construed as being limited to those drawn in Fig. 2.

A stainless steel processing chamber 11 is of a structure capable of being evacuated to a high degree of vacuum and kept in a hermetically close state as desired. An object holder 12 capable of holding an object 15 to be treated, for example, for an improvement in the superconducting properties thereof, and of controlling the temperature of the object 15, is provided with a heater 13 and a thermocouple 14. The object holder 12 has a diameter of 10 cm and can be heated from about 0°C up to about 450°C. The temperature of the object holder 12 can be measured by means of the thermocouple 14 and is controlled by supplying electric power to the heater 13 through an on-off control using a simple relay or through a P, P+I or P+I+D control using a temperature control system not shown in Fig. 2 in combination with a thyristor unit also not shown in Fig. 2, wherein P stands for the proportional, I stands for the integral and D stands for the differential. If necessary, a water-cooling or other cooling mechanism may be used in combination with the foregoing temperature control means.

A discharge tube 21 is a double tube made of quartz glass and having a structure capable of passing water between two tubular parts. In this example, the quartz glass tube is 3 cm in innermost diameter and 53 cm in length. The direction of inflow of cooling water is designated by 26a, while the direction of outflow thereof is designated by 26b.

A coil 22 can be made from a copper pipe, which is cooled by passing cooling water therethrough. One end of the coil 22 is earthed, while the other end is connected to a radiofrequency power source 24 via a matching circuit 23. In this embodiment, the radiofrequency power source 24 is 13.56 MHz in frequency and 5kW in output.

In this embodiment, oxygen can be used as a gas for forming active species of oxygen. The oxygen gas is fed in the direction of arrow 25 through a pressure reducing valve and a flow rate controller both not shown in Fig. 2 from an oxygen cylinder also not shown in Fig. 2, and is exhausted in the direction of arrow 29. A Root's pump and a oil rotary pump both not shown in Fig. 2 may be used for exhausting the gas.

The stainless steel process chamber 11 is provided, apart from the discharge tube 21, with a rubber O-ring 30 which serves to connect the chamber 11 and discharge tube 21. Such separation of the process chamber 11 from the discharge tube 21 is to keep the plasma away from the object 15 to thereby prevent the object 15 from being destroyed by the plasma itself and to keep the RF coil 22 from heating the object 15 so as to avoid any adverse influences on the improvement in the superconducting properties of the object 15. The pressure inside the process chamber 11 can be measured by a pressure gauge 17 and is kept constant through control of a valve installed in front of arrow 29 but not shown in Fig. 2.

As described in US Patent No 4,664,747, when an electric power is supplied from the radiofrequency power source 24 to the coil 22, there initially occurs a radiofrequency glow discharge broadly spread across the discharge tube 21. When increased electric power is supplied to the coil 22, there is generated a nonequilibrium or equilibrium high-temperature plasma 27 pinched locally in a space surrounded by the coil 22.

Active oxygen species 28 are formed by the nonequilibrium or equilibrium high-temperature plasma 27. Depending on the pressure (often when the pressure is as low as at most about 10 Torr), the active species 28 may also include active oxygen species formed by a glow discharge plasma, which is observed around the nonequilibrium or equilibrium high-temperature plasma 27.

The life span of the active species 28 during transportation thereof to the process chamber 11 is detailed in the paper of J.M. Cook, "Solid State Technology," Japanese edition, May (1987) p. 28 - p. 33 and literature cited therein, in which the life span, downstream, of oxygen atoms formed by microwave discharge is discussed and which concludes that 90% or more of oxygen atoms are still active 50 cm downstream of a plasma, there is no discussion however in this paper about the application of such oxygen atoms to superconducting materials.

In this embodiment, tetragonal structured $Ba_2Y$-$Cu_3O_x$ pellets of 1 cm in diameter and 2mm in thickness which may be prepared through quenching from 930°C instead of furnace cooling therefrom were used as the objects 15. Each object 15 of tetragonal structure having no superconducting properties was mounted on the object holder 12 in the apparatus as shown in Fig. 2, which was then placed under conditions which may include an oxygen flow rate of 200 sccm, a pressure, inside the process chamber 11, of 0.7 Torr, and an electric power of 3kW. The temperature of the object holder 12 is preferably set within the range of 0 to 450°C because the oxidative effect of active species inside the object is significant at a temperature of 450°C or lower and the time necessary for oxidation of the object is within the practical range at a temperature of 0°C or higher. In view of this, in this embodiment, the temperature of the object holder 12 was set as low as 300°C or 400°C during the treatment. In this embodiment, a nonequilibrium high-temperature plasma was generated to form active species, which were supplied to the object 15.

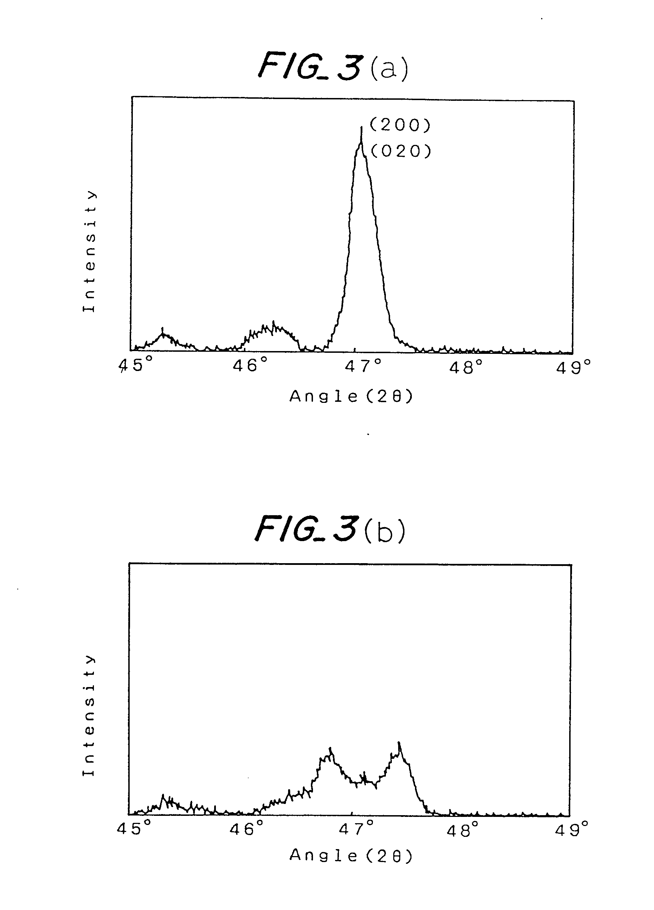

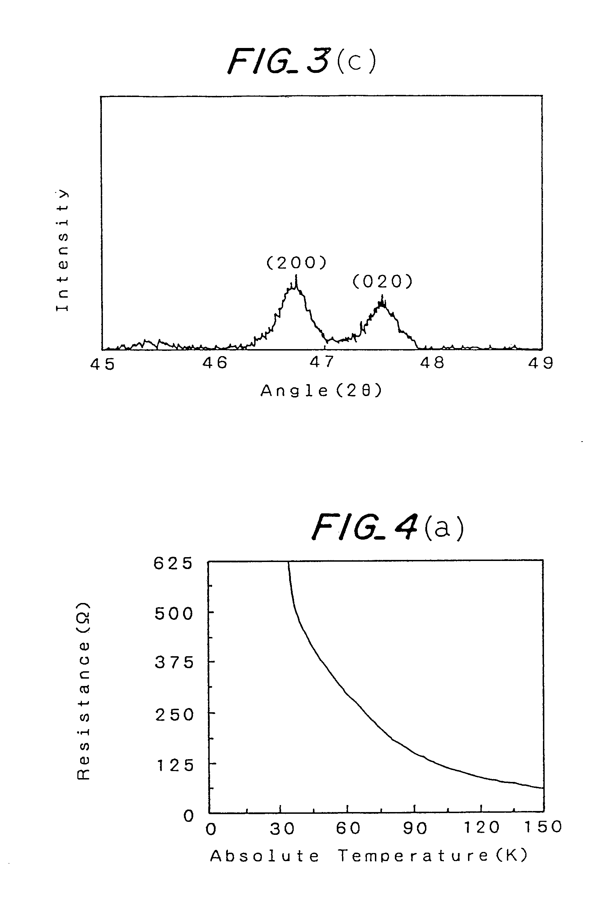

Figs. 3(a), 3(b) and 3(c) show the results of X-ray diffractometric analyses of a pellet not treated and pellet treated under the foregoing conditions.

Fig. 3(a) is the X-ray deffraction pattern of the pellet not treated, while Figs. 3(b) and 3(c) are the X-ray diffraction patterns of the pellets treated at 300°C for 1 minute and 5 minutes, respectively. The abscissa of each figure represents the angle, while the ordinate of each figure represents the intensity (relative value) of X-ray reflected from each pellet.

The X-ray diffraction patterns of $Ba_2YCu_3O_x$ superconductors are well known. Tetragonal structure $Ba_2YCu_3O_x$ and orthorhombic structure $Ba_2Y-Cu_3O_x$ having superconducting properties as well as the relationship between the oxygen content of $Ba_2YCu_3O_x$ crystals and the superconducting properties thereof are detailed in the paper of Nakanishi et al., "Jpn. J. Appl. Phys." 27, (1988) p. L329 - p. L332, the paper of Y. Kubo et al., "Jpn. J. Appl. Phys.," 26, (1987) p. L768 - P. L770 and literature cited therein. As is well known, X-ray diffractometry provides a reflection intensity pattern with peaks at angles in accordance with the lattice constants of a-, b- and c-axes of a crystal. In the case of tetragonal crystals, since the lattice constant of a-axis is equal to that of b-axis, reflection peaks respectively assigned to the (200) plane and (020) plane appear in the form of one strong reflection peak at the same angle in an X-ray diffraction pattern as shown in Fig. 3(a). In the case of orthorhombic crystals, since the lattice constant of a-axis is different from that of b-axis, peaks respectively assigned to the (200) plane and (020) plane appear at different angles in an X-ray diffraction pattern as shown in Fig. 3(c). The X-ray diffraction pattern shown in Fig. 3(b) is a mixture of the patterns of tetragonal and orthorhombic cyrstals.

The X-ray diffraction pattern of Fig. 3(a) is a typical pattern of tetragonal crystals which does not represent a crystal structure capable of showing superconductivity as will be described later.

The X-ray diffraction pattern of Fig. 3(b), which is of the pellet treated using a nonequilibrium high-temperature plasma at 300°C for 1 minute, represents a mixed crystal structure of the tetragonal and the orthorhombic type.

The X-ray diffraction pattern of Fig. 3(c), which is of the pellet treated using a nonequilibrium high-temperature plasma at 300°C for 5 minutes, represents a typical crystal structure of the orthorhombic type. This means that the tetragonal crystal structure substance can be changed within a period of time as short as 5 minutes at a temperature as low as 300°C according to one embodiment of the method of the present invention to provide an orthorhombic structured substance having superconducting properties.

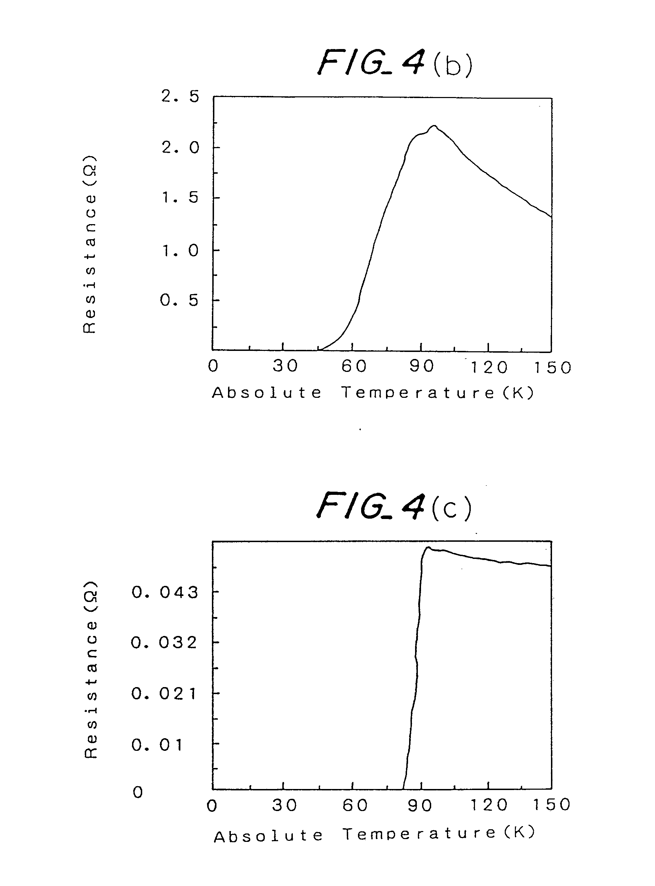

Figs. 4(a), 4(b) and 4(c) show electric resistance versus temperature characteristic curves of pellets prepared in the same manner as described before and both treated or not treated. In each of Figs. 4(a), 4(b) and 4(c), the abscissa represents the absolute temperature (K), while the ordinate represents the electric resistance ( ).

Fig. 4(a) is of a pellet not treated, while Fig. 4(b) is of a pellet treated at 300°C for 30 minutes and Fig. 4(c) is of a pellet treated at 400°C for 30 minutes.

The pattern of Fig. 4(a) represents the characteristics of a semiconductor, which shows that the pellet is of tetragonal crystal structure and has no superconducting properties.

As is well known, superconductivity is associated with an electric resistance of zero. Accordingly, the pattern of Fig. 4(a) represents no superconducting properties, while the patterns of Figs. 4(b) and 4(c) represent such superconducting properties and show superconductive transition temperatures of about 50K and about 85K, respectively. Fig. 4(c) in particular shows good superconducting properties subtantially comparable to the 90-K class of superconductivity. It was confirmed that the pellets corresponding to Figs. 4(b) and 4(c) showed diamagnetism at the liquid nitrogen temperature (77K).

As described above, according to one embodiment of the method of the present invention, a tetragonal structure substance having no superconducting properties can be changed into an orthor-hombic structure substance having superconduct-ing properties through treatment at a temperature as low as 300°C or 400°C in a very short period of time compared with that necessary for conventional annealing-in-oxygen treatment under atmospheric pressure, also the superconducting properties of an orthorhombic structure substance can be enhanced to a high level of the 90-K class of superconductivity. Although the experiments of the foregoing embodiment were carried out with the object holder being kept at a temperature of 300°C or 400°C, the effect of the present invention can be expected to be satisfactorily exhibited at any temperature of the object holder falling within the range of 0°C to 450°C.

Further, an object having inferior superconducting properties (an object which shows superconductivity at lower temperatures) can come to show superconductivity at higher temperatures when treated according to the method of the present invention.

While the treatments were carried out under a vacuum pressure of 0.7 Torr in the foregoing embodiment, the effect of the present invention is not lost by a treatment using a nonequilibrium or equilibrium high-temperature plasma carried out under a pressure equal to or higher than atmospheric pressure. In this case, a nonequilibrium plasma sometimes changes into an equilibrium plasma.

While bulk pellets were used in the foregoing embodiment, the method of the present invention can be expected to be effective not only for thin and thick films formed by sputtering, vacuum evaporation and deposition, or the like, but also for powders.

In addition, the method of the present invention may be used in a film oxidation treatment carried out simultaneously with superconducting film formation by a CVD method to secure the same effect as demonstrated above.

During film formation by vacuum evaporation and deposition, MBE or the like, a film being formed can be oxidized while exhausting a gas.

In addition to $Ba_2YCu_3O_x$, superconductors and starting materials thereof which can be used in embodiments of the method of the present invention include those analogous to $Ba_2YCu_3O_x$ but containing a lanthanoide element (Ln) instead of Y and hence represented by the formula:
$LnBa_2Cu_3O_x$, wherein Ln is La, Ce, Pr, Nd, Pm, Sm, Eu, Gd, Tb, Dy, Ho, Tm, Yb, or Lu;
those containing the same elements as in either of the above-mentioned two formulae but in amounts stoichiometrically different from the amounts in the above-mentioned formulae; those of Bi or Tl type represented by either of the following two formulae:
$Bi_2Ca_2Sr_2Cu_3O_x$, and
$Tl_2Ba_2Ca_2Cu_3O_x$;
those containing the same elements as in either of the two formulae just mentioned above but in amounts stoichiometrically different from the amounts in the formulae just mentioned above; and others with various elemental and stoichiometrical compositions.

Data will now be given on an experiment wherein superconductors of Bi type as mentioned above were used. A $Bi_2Ca_2Sr_2Cu_3O_x$ film of 1 μm in thickness was formed on an MgO substrate in an atmosphere of argon under a pressure of $5 \times 10^{-4}$ Torr by using a magnetron sputtering apparatus Model SPF-210 manufactured by the Anelva Corporation. This thin film had a superconductive transition temperature $T_c$ of 45K. The thin film was oxidized with active species formed by a nonequilibrium high-temperature plasma under conditions involving an oxygen flow rate of 200 sccm, a discharge electric power of 3kW, a pressure of 0.7 Torr, a substrate temperature of 400°C and a treatment time of 30 minutes according to the method of the present invention. A similar film having a similar $T_c$ to that described above was also annealed in oxygen under atmospheric pressure at 400°C for 30 minutes. In the latter case, however, no improvement in the superconducting properties of the film was observed. Thus, the effectiveness of the method of the present invention was again confirmed by the foregoing experiment. Further, the method of the present invention was also found to be effective for a film of $Bi_8Pb_2Ca_{10}Sr_{10}Cu_{15}O_x$, which corresponds to $Bi_2Ca_2Sr_2Cu_3O_x$ whose Bi is partially replaced with Pb.

The apparatus suitable for carrying out embodiments of the method of the present invention is not limited to the structure as shown in Fig. 2. Apparatus suitable for carrying out embodiments of the method of the present invention and which give the same effect as that demonstrated hereinbefore include various structures disclosed in US Patent No. 4,664,747 and those disclosed in the paper by the authors of the present invention, "Shinku," Vol. 31, No. 4 (1988) p. 271 - p. 278 and literature cited therein.

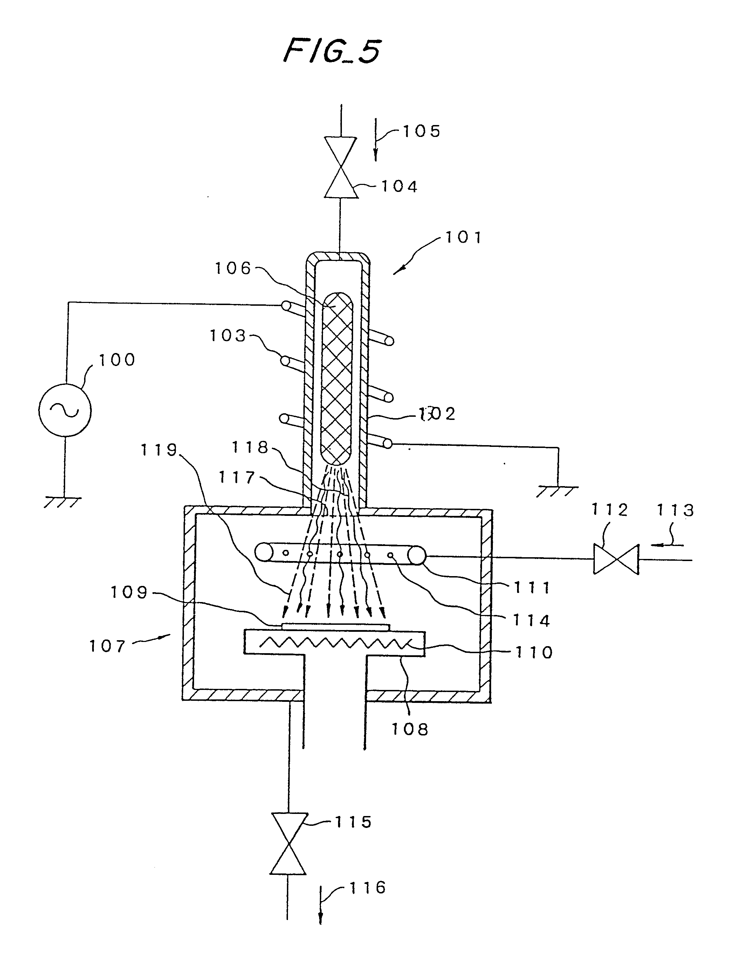

Figs. 5 to 7 show such apparatus as disclosed in the US Patent No. 4,664,747, respectively.

In Fig. 5, reference numeral 100 shows a RF power source, 101 a discharge chamber, 102 a discharge tube, 103 a coil, 104 a valve, 105 indicates the direction along which a discharge gas is introduced via the valve into the discharge tube 102, 106 a plasma generated in the discharge tube 102, 107 a reaction chamber, 108 a substrate holder for mounting thereon a substrate or object 109 to be treated, 110 a temperature controller, 111 a hollow conducting ring provided in the reaction chamber 107 for conducting thereinto reaction gas via a valve 112 in a direction 113, 114 through-holes bored in the ring 111, 115 a valve through which the conducted gas in the discharge chamber 107 is exhausted in a direction 116, 117 a mesh-shaped electrode provided for conducting active species 118 produced from plasma 106 to the surface of the substrate 109, and 119 the radiation directed onto the surface of the substrate 109.

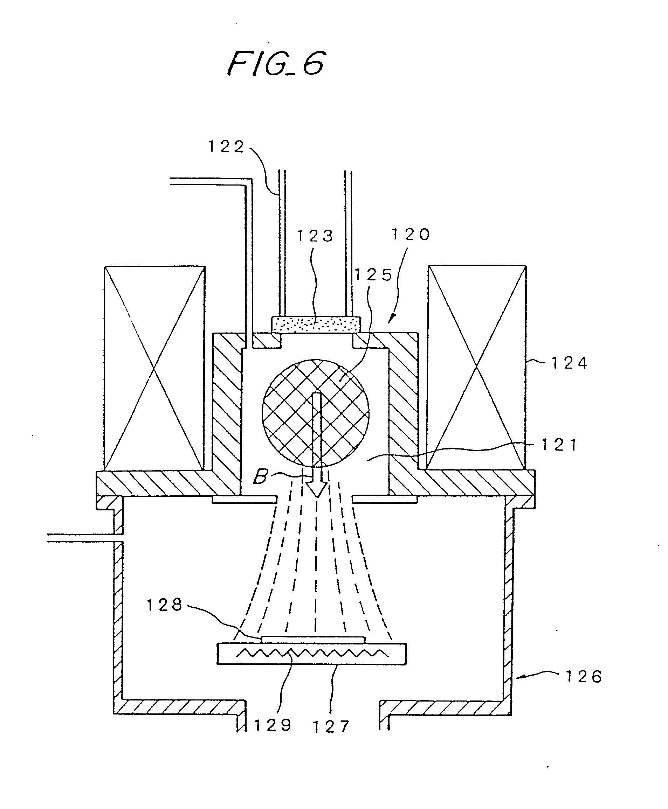

In Fig. 6, reference numeral 120 shows a discharge chamber, 121 a cavity resonator to which microwave power is supplied via a waveguide 122 and a microwave conducting window 123, 124 an electromagnetic coil for generating a magnetic field "B" in the cavity resonator 121, 125 a plasma, 126 a reaction chamber, 127 a substrate holder for mounting a substrate or an object 128 to be treated, and 129 a temperature controller. The active species produced by the plasma 125 cascades on the substrate 128 after being accelerated in the diverging portion of the magnetic field "B".

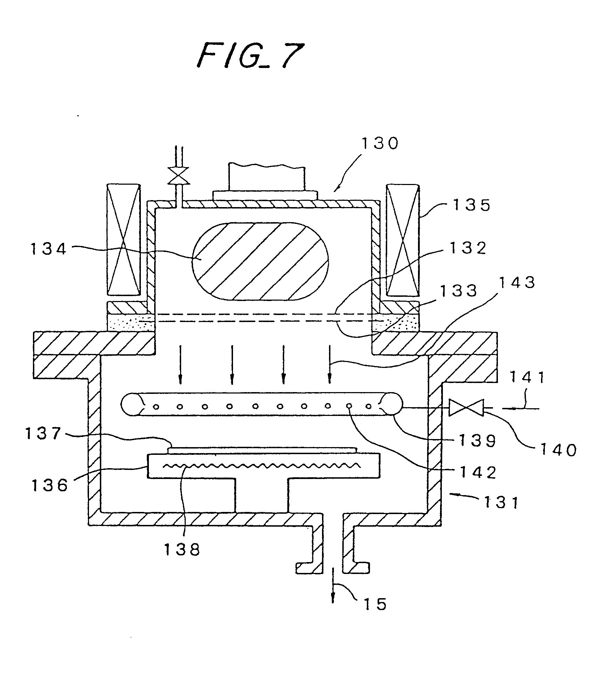

In Fig. 7, reference numeral 130 shows a discharge chamber, 131 a reaction chamber, 132 and 133 shielding light-grids provided in a region between the discharge chamber 130 and the reaction chamber 131, 134 a plasma, 135 an electromagnetic coil for generating a magnetic field in the discharge chamber 130, 136 a substrate holder for mounting a substrate or an object 137 to be treated, 138 a temperature controller, 139 a hollow conducting ring provided in the reaction chamber 131 for conducting thereinto reaction gas via a valve 140 in a direction 141, 142 through-holes bored in the ring 139, and 143 an activated core or active species of the plasma 134 passing through the shielding light-grids 132 and 133. The active species 143 are directed onto the surface of the substrate 137.

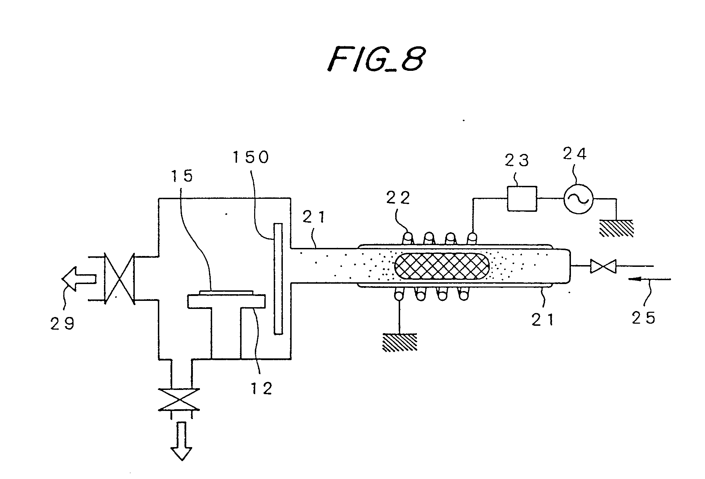

Fig. 8 shows another embodiment of an apparatus suitable for performing the present invention. The apparatus, basically, has substantially the same construction as that of the apparatus shown in Fig. 2 and, accordingly, the constructional members or parts corresponding to those shown in Fig. 2 are illustrated by the same reference numerals as those used in Fig. 2. In Fig. 8, reference numeral 150 shows a quartz plate provided in the treatment chamber 11 at the outlet of the discharge tube 21. This wall-like plate prevents the plasma from directly bombarding the surface of the substrate 15. In this construction, the active species are directed onto the surface of the substrate.

While oxygen was used as a gas for oxidation, i.e. the gas for generation of active species, other gases can be used in the present invention, e.g. the use of ozone or nitrous oxide can be expected to be effective as well.

The foregoing given treatment conditions such as the pressure of 0.7 Torr, the oxygen flow rate of 200 sccm, the substrate temperature, the supplied electric power, and the structure of the apparatus are merely preferred ones, which, therefore, should not be construed as limiting the scope of the present invention.

When the effect of a plasma as the source of active oxygen species is utilized, a bias voltage such as a DC, AC or RF voltage may be applied to the object holder 12.

As described hereinbefore, the method of the present invention is characterised in that an oxide superconductor (already having some superconducting properties) or a starting material for an oxide superconductor (having potential of a superconductor in terms of the composition thereof but no superconducting properties yet) is irradiated with active species formed by a nonequilibrium or equilibrium high-temperature plasma to improve the superconducting properties of the former or give superior superconducting properties to the latter. Accordingly, various apparatus structures in combination with various conditions are suitable for carrying out the method of the present invenion.

As described hereinbefore, the method of the present invention is capable of forming a good oxide superconductor from an oxide superconductor or a starting material for an oxide superconductor in a very short time through oxidation thereof with active oxygen species formed by a nonequilibrium or equilibrium, high-temperature plasma.

## Claims

1. A method of improving or producing an oxide superconductor, comprising irradiating an object material comprising an oxide superconductor or a starting material for an oxide superconductor with active oxygen species formed within or at the periphery of a nonequilibrium or equilibrium high-temperature plasma, while keeping said object material at a temperature at which said object material is effectively oxidized with said active oxygen species.

2. A method of improving or producing an oxide superconductor as claimed in claim 1, wherein said oxide superconductor or said starting material for an oxide superconductor comprises $Ba_2YCu_3O_x$ wherein x stands for the quantitative proportion of oxygen.

3. A method of improving or producing an oxide superconductor as claimed in claim 1, wherein said oxide superconductor or said starting material for an oxide superconductor comprises $Bi_2Ca_2Sr_2Cu_3O_x$ wherein x stands for the quantitative proportion of oxygen.

4. A method of improving or producing an oxide superconductor as claimed in any preceding claim, wherein said temperature of said object material being irradiated with said active oxygen species is controlled by controlling the temperature of an object holder on which said object material is mounted.

5. A method of improving or producing an oxide superconductor as claimed in claim 4, wherein said temperature of said object holder is kept in the range of 0°C to 450°C.

6. An article produced by using a method according to any one of claims 1 to 5.

7. An apparatus for use in a method according to any one of claims 1 to 5.

## *FIG_I*(a)

Tetragonal Oxide Substances

## *FIG_I*(b)

Orthorhombic Oxide Superconducting Substances

# FIG_2

*FIG. 3* (a)

*FIG. 3* (b)

## *FIG_3*(c)

## *FIG_4*(a)

## *FIG_4*(b)

## *FIG_4*(c)

## FIG_5

# FIG_6

# FIG_7

# FIG_8